# FASCICULE DE BREVET EUROPEEN

(11) **EP 0 743 087 B1**
(45) Date de publication et mention de la délivrance du brevet: **12.03.2003**
(21) Numéro de dépôt: 96401045.8
(22) Date de dépôt: 14.05.1996
(51) Int. Cl.: B01D 53/047, B01D 53/04, B01D 53/053

(54) **Procédé de séparation de gaz par adsorption**
Verfahren zur Gastrennung mittels Adsorption
Process for gas separation by adsorption

(30) Priorité: 19.05.1995 FR 9505956
(43) Date de publication de la demande: 20.11.1996
(60) Demande divisionnaire: 02006749.2
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Brugerolle, Jean-Renaud, 75016 Paris (FR); Monereau, Christian, 75011 Paris (FR)
(74) Mandataire: Le Moenner, Gabriel

(56) Documents cités:
- EP-A- 0 038 410
- EP-A- 0 525 521
- WO-A-88/05693
- DE-A- 2 337 754
- DE-A- 3 405 260
- FR-A- 2 138 663
- US-A- 5 370 728

## Description

La présente invention concerne les procédés de séparation de gaz par adsorption à variation de pression, du type dit VSA ou MPSA, et plus particulièrement procédés utilisant des dispositifs de moyenne ou faible capacité comportant au moins une machine tournante agissant sur un adsorbeur en compresseur ou en pompe.

Les dispositifs utilisés dans des procédés connu, tels que décrits dans le document US-A-4.534.346, de 1983, et, plus récemment, dans le document US-A-5.370.728, de 1993, comportent une machine tournante ayant un côté haute pression et un côté basse pression et actionnée en rotation en permanence dans le même sens et à la même vitesse, l'optimisation au niveau de la machine tournante se trouvant toutefois fortement contrebalancée par la mise en oeuvre de nombreuses vannes dont le nombre, d'une part, et le réglage et la maintenance de leur synchronisation, d'autre part, obèrent grandement les coûts de fabrication et d'utilisation.

Le document FR-A-2 138 663 décrit d'autre part un dispositif de contrôle de teneur en CO₂ dans une enceinte de conservation de végétaux comportant au moins un adsorbant au travers duquel, grâce à une soufflante réversible et deux jeux de vannes sensibles à la pression, on fait passer dans un sens, dans une première boucle, l'atmosphère de l'enceinte pour en réduire la teneur en CO₂, et, dans l'autre sens, dans une seconde boucle, l'air environnant pour régénérer l'adsorbant.

La présente invention a pour objet de proposer un procédé utilisant un dispositif d'absorption de type VSA permettant de simplifier les circuiteries et de limiter grandement le nombre de vannes et permettant ainsi la réalisation d'un procédé utilisant des modules d'adsorption individuels présentant une grande souplesse d'utilisation et autorisant notamment leur association en batterie de modules en parallèle permettant de couvrir de grandes plages d'utilisation et des conditions de fonctionnement.

Pour ce faire, l'invention propose un procédé de séparation de gaz par adsorption de type VSA, selon la revendication 1.

Selon d'autres caractéristiques de l'invention:
- un premier moyen de stockage est relié en permanence à une ligne d'utilisation du gaz appauvri
- au moins un second moyen de stockage est relié uniquement au conduit de sortie ;
- le dispositif utilisé comprend au moins deux modules individuels disposés en parallèle entre la source de mélange de gaz et la ligne utilisatrice.

Avec un procédé selon l'invention, il n'existe aucune vanne d'isolement de part et d'autre de la machine tournante, et en particulier entre cette dernière et l'entrée de l'adsorbeur, la réversibilité de cette machine tournante permettant d'assurer alternativement et successivement une compression du mélange gazeux à séparer jusqu'à une pression haute de cycle pour l'étape d'adsorption et un pompage sous vide jusqu'à une pression basse de cycle pour une étape de désorption, l'inversion s'effectuant de façon souple et économique en exploitant au mieux les auto-rotations résultant des différentiels de pressions inversées et des forces d'inertie s'exerçant sur les équipages tournants de la machine.

D'autres caractéristiques et les avantages de la présente invention ressortiront de la description suivante de modes de réalisation donnés à titre illustratif mais nullement limitatif, faite en relation avec les dessins annexés, sur lesquels :
- la figure 1 est une vue schématique d'un mode de réalisation d'un module d'adsorption utilisé dans le procédé selon l'invention ;
- la figure 2 est une représentation schématique d'un cycle de pression et des mises en rotation correspondantes de la machine tournante ;
- la figure 3 est un graphe explicatif d'un cycle caractéristique de pressions et des phases d'actionnement correspondantes des vannes du module selon la figure 1 ;
- la figure 4 est une vue schématique d'un dispositif mettant en oeuvre deux modules ;
- la figure 5 est un graphe, analogue à celui de la figure 3, illustrant les cycles et ouvertures/fermetures des vannes du dispositif de la figure 4 ;
- la figure 6 est une vue schématique d'un mode de réalisation pratique d'un module utilisé dans le procédé selon l'invention.

Dans la description qui va suivre et sur les dessins, les éléments identiques ou analogues portent les mêmes chiffres de référence, éventuellement indicés.

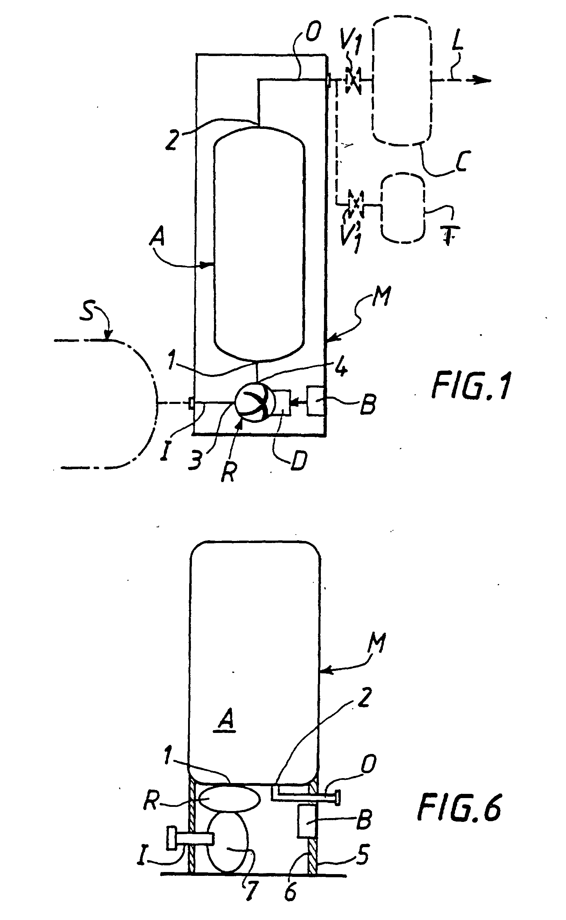

Sur la figure 1, on a représenté un module d'adsorption M utilisé dans le procédé selon l'invention comprenant typiquement un adsorbeur A, de configuration typiquement verticale, ayant une entrée 1 et une sortie 2 et contenant au moins un adsorbant capable de retenir au moins un constituant d'un mélange gazeux à séparer. L'entrée 1 est reliée à un conduit d'entrée I par une machine tournante réversible R, typiquement un Roots ou une machine à rotors multi-lobés, entraînée par un moteur électrique D piloté par un boîtier de commande B. La sortie 2 est reliée à un conduit de sortie O destiné à être relié, via une vanne d'isolement V₁ et une capacité C, à une ligne utilisatrice L, tandis que le conduit d'entrée I est destiné à être relié à une source S de mélange gazeux à séparer pouvant accepter un rejet de gaz résiduaire par le dispositif de l'invention. Selon une application particulière de l'invention, le mélange gazeux à séparer est l'air, la source S étant l'atmosphère ambiante, l'adsorbeur contenant au moins un adsorbant capable de retenir par adsorption les constituants non voulus du constituant à produire, qui est typiquement l'oxygène ou éventuellement l'azote.

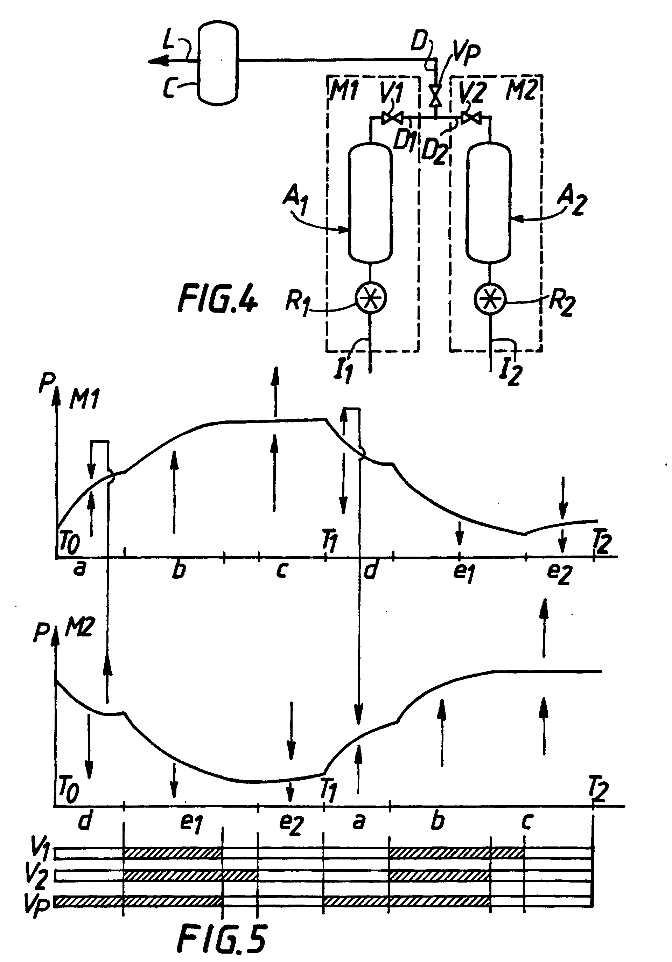

Avantageusement, comme représenté sur la figure 1, le conduit de sortie O est relié, via une vanne d'isolement V₁, à au moins un réservoir T relié fonctionnellement uniquement au conduit de sortie O pour participer à des phases d'équilibrage et repressurisation de l'adsorbeur A, comme décrit plus avant en liaison avec la figure 3, ou à l'équilibrage et élution de ce dernier, en restituant au moins une partie du gaz qui y a préalablement été emmagasiné.

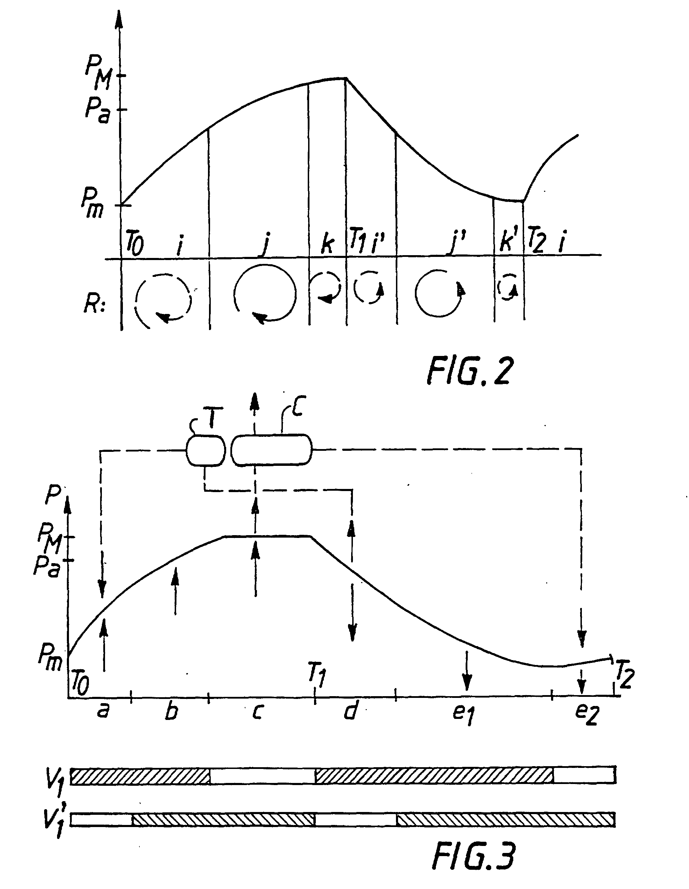

On a représenté sur la figure 2 les cycles associés de pressions (en haut) et de rotation de la machine tournante (en bas). Le cycle de pressions comprend une phase de pressurisation et de production T0-T1, entre la pression basse du cycle Pₘ, n'excédant pas 0,6x10⁵ Pa, typiquement entre 0,2 et 0,6 x 10⁵ Pa, avantageusement entre 0,3 et 0,5 x 10⁵ Pa, et la pression haute du cycle P_{M}, légèrement supérieure à la pression atmosphérique, typiquement entre 1,05 et 1,5 x 10⁵ Pa, et une phase de dépressurisation et de désorption T1-T2, entre les pressions P_{M} et Pₘ. La machine tournante n'est entraînée par le moteur que pendant les portions centrales j et j' des phases de cycle. Ainsi, le surpresseur étant entraîné par le moteur électrique en étape de compression j, une courte période de temps avant le moment d'inversion T₁ entre les deux phases, l'alimentation du moteur est interrompue, la machine tournante continuant sur sa lancée, sous l'effet de l'énergie cinétique, pendant l'étape k jusqu'à l'arrêt naturel au moment T₁ où, cette fois sous l'effet de la différence de pression entre les passages de gaz opposés 3 et 4, elle amorce une rotation naturelle dans l'autre sens, reprise et amplifiée, en fin de l'étape i', par l'entraînement actif, dans ce sens inverse, de la machine tournante, fonctionnant alors en pompe, pendant la durée de l'étape j', l'entraînement mécanique étant de même interrompu peu avant l'atteinte de la pression basse à l'instant T₂, l'équipage tournant continuant sur sa lancée pendant l'étape k', jusqu'à s'arrêter et amorcer à l'instant T₂, une rotation dans le sens inverse, sous l'effet du différentiel de pression entre les passages 3 et 4 pendant l'étape i, cette rotation étant accompagnée puis amplifiée par entraînement mécanique pendant l'étape j, comme précédemment décrit. Les études effectuées par la déposante ont révélé que, dans un tel mode de fonctionnement, la durée des phases d'auto-rotation décélérante k et k', de l'ordre de la seconde, et la durée des phases d'auto-rotation accélérante, de l'ordre de 2 à 5 secondes, étant parfaitement compatibles avec la durée globale de la plupart des cycles d'adsorption (de 20 à 150 secondes selon les capacités et les applications). On peut d'autre part adapter, si besoin est, l'inertie de la machine tournante aux cycles VSA, par exemple, au moyen de volants d'inertie, le cas échéant associés à des embrayages unidirectionnels centrifuges.

On retrouve le cycle de pressions de la figure 2 sur la figure 3 où l'on a indiqué les circulations de gaz à l'entrée et à la sortie de l'adsorbeur et vers/depuis la capacité et le réservoir. La phase de pressurisation/production T0 à T1, où du mélange à séparer est introduit par la machine tournante R dans l'entrée 1 de l'adsorbeur A, est décomposée en une étape initiale a où la vanne V'₁ est ouverte et le gaz ou mélange de gaz non préférentiellement adsorbé, ou gaz de production, par exemple de l'oxygène, est introduit simultanément à contre-courant, par la sortie de l'adsorbeur A. Cette première étape de pressurisation est suivie par une deuxième étape de pressurisation b assurée par le seul mélange gazeux à séparer, les vannes V, V'₁ étant fermées. A la fin de cette deuxième étape de pressurisation b où la pression a dépassé la pression atmosphérique, la vanne V₁ est ouverte pour une étape c de production à pression légèrement croissante ou sensiblement isobare à la pression haute du cycle PM.

Comme expliqué plus haut, au moment T1, en fin de production à pression haute du cycle, la rotation de la machine tournante R s'inverse et un mélange gazeux riche en composants adsorbés s'échappe par l'entrée 1 pendant toute la deuxième phase T1-T2. Dans une première étape d de cette deuxième phase, la vanne V'₁ est ouverte de façon à assurer une dépressurisation simultanément par le haut et par le bas de l'adsorbeur, après quoi, pendant une étape e₁, les vannes V₁ et V'₁ sont fermées et la mise sous vide de l'adsorbeur se poursuit jusqu'à la pression basse de cycle Pₘ jusqu'à la fin de la phaseT₁-T₂. De préférence, un peu avant le temps T₂, la vanne V₁ est ouverte pour réaliser une étape e₂ d'élution par du gaz de production en provenance de la capacité.

Du fait de son autonomie, un dispositif mono-adsorbeur selon la figure 1 ne pose pas de contraintes particulières concernant la durée respective des phases T0-T1 et T1-T2, non plus que des étapes constitutives de ces phases. Le moteur D peut entraîner le surpresseur à la même vitesse dans les deux sens de rotation ou à des vitesses différentes. De préférence, la machine tournante R est entraînée à vitesse maximale lors de l'étape j' de la phase de pompage T₁-T₂ et à une vitesse moindre, typiquement environ 50 % de la vitesse maximale, en phase de compression d'air, pendant l'étape j de la phase T0-T1.

En variante, l'alimentation du moteur peut être interrompue au moment T₁, ou même après une courte période de temps après le moment T₁. Dans ce cas, la machine s'arrête et s'inverse naturellement pendant l'étape d. De même, en fin de dépressurisation, le moteur peut être interrompu au moment T₂, voire une courte période de temps après le moment T₂. Si l'alimentation du moteur est effectuée par l'intermédiaire d'un variateur de vitesse, ce dernier pourra être programmé pour accompagner et/ou aider l'arrêt et l'inversion du sens de rotation naturels de la machine.

On a représenté sur la figure 4 un dispositif de séparation mettant en oeuvre deux modules M₁ et M₂ tels que décrits ci-dessus en relation avec les figures 1 à 3. Dans ce cas, les conduits O₁ et O₂ de sortie se raccordent, chacun via une vanne V₁, V₂, respectivement, à une même capacité C dans une portion amont D de la ligne de production L pourvue d'une vanne d'isolement V_{P} dont les étapes d'ouverture et de fermeture sont représentées, à côté de celles des vannes V₁ et V₂, sur le graphe de la figure 5 où l'on a superposé les cycles de pression des deux modules M₁ et M₂. Dans ce mode de réalisation à deux modules, l'admission de gaz à contre-courant lors de la première étape a de la phase de pressurisation/ production est assurée par équilibrage ou pseudo-équilibrage avec l'autre adsorbeur commençant, en étape d, sa phase de dépressurisation, les cycles de pression et d'entraînement mécanique des machines tournantes R₁ et R₂ étant par ailleurs identiques à ceux décrits précédemment en relation avec les figures 2 et 3.

Dans les dispositifs à deux modules, la durée de l'étape a est, comme on l'a vu, égale à la durée de l'étape d et la durée des phases T0-T1 et T1-T2 est la même dans chaque module, le cycle d'un adsorbeur étant décalé d'une phase de cycle par rapport à l'autre adsorbeur. Comme précédemment, chaque machine tournante est entraînée à vitesse maximale pendant l'étape de pompage j' et à vitesse réduite, typiquement moitié de la vitesse maximale, pendant la phase de pressurisation j.

Comme on l'aura compris, un dispositif de séparation de gaz par adsorption utilisé dans le procédé selon l'invention peut comprendre une pluralité de modules M en parallèle, avec des synchronisations adaptées entre les différents modules. Ainsi, pour un dispositif à trois modules, si l'on retrouve la même durée pour les étapes a et d, pour chaque module, la durée de la phase de pressurisation/production T0-T1 est ici égale à la moitié de la durée de la phase de dépressurisation/désorption T1-T2, les modules présentant un décalage temporel dans leur cycle propre d'un tiers de la durée totale du cycle entre eux. Pour une pression haute de cycle entre 1,1 et 1,5 x 10⁵ Pa et une pression basse de cycle comprise entre 0,5 et 0,3 x 10⁵ Pa, une vitesse unique du moteur d'entraînement dans l'un et l'autre sens représente le meilleur compromis énergie/investissement.

Pour des dispositifs de production d'oxygène, à partir de l'air, avec un adsorbant constitué d'au moins une zéolithe, notamment une zéolithe LiX, les pressions P_{M} et Pₘ sont typiquement celles mentionnées dans le paragraphe précédent, la durée totale d'un cycle étant comprise typiquement entre 30 et 120 secondes.

L'autonomie des modules selon l'invention permet de les assembler en batterie de n modules et de les mettre en oeuvre, selon les besoins, automatiquement ou manuellement, en tout ou partie. Par ailleurs, en cas d'incident ou de maintenance sur un module, le fonctionnement peut être aisément assuré, au moins temporairement, avec n-1 modules.

On a représenté sur la figure 6 un mode de réalisation particulier d'un module selon l'invention. Comme on le voit, l'adsorbeur vertical A, typiquement à circulation interne de gaz horizontale, a sa sortie 2 disposée également en partie basse, l'adsorbeur A étant supporté par un bâti 5 formant jupe définissant un volume interne dans lequel sont disposés la machine tournante R et son moteur d'entraînement D, le châssis 5 comportant un revêtement d'isolation phonique 6. Sur la figure 6, on a représenté un régénérateur 7 interposable entre le conduit d'entrée I et la machine tournante R et permettant, en période froide, de récupérer une partie de l'énergie calorifique en phase de pompage pour réchauffer le mélange gazeux introduit dans l'adsorbeur en phase de compression. On peut également insérer un réfrigérant, par exemple du type atmosphérique, entre le passage 4 de la machine tournante et l'entrée 1 de l'adsorbeur.

## Revendications

1. Procédé de mise en oeuvre d'un dispositif de fourniture d'un gaz appauvri en au moins un des constituants d'un mélange gazeux par séparation du mélange gazeux par adsorption de type VSA, comprenant au moins un module (M) ayant une entrée de mélange gazeux à séparer et une sortie de gaz appauvri connectable à une ligne (L) d'utilisation de gaz appauvri, le module comprenant, en série entre l'entrée et la sortie, une machine tournante (R) réversible et un adsorbeur (A), suivant un cycle comprenant les étapes successives suivantes :
- actionner la machine toumante dans une première direction pendant une première phase de pressurisation et production (T0-T1) pour alimenter l'adsorbeur en mélange gazeux jusqu'à une pression haute de cycle (PM) supérieure à la pression atmosphérique pour fourniture en sortie du gaz appauvri (L) ;
- interrompre l'entraînement de la machine toumante ;
- actionner la machine tournante dans la deuxième direction pendant une deuxième phase de dépressurisation et désorption (T1-T2) pour dépressuriser l'adsorbeur jusqu'à une pression basse de cycle (Pm) n'excédant pas 0,6 x 10⁵ Pa ; et
- interrompre l'entraînement de la machine tournante.

2. Procédé selon la revendication 1, **caractérisé en ce que** la pression basse du cycle est comprise entre 0,3 et 0,5 x 10⁵ Pa.

3. Procédé selon la revendication 1 ou 2, **caractérisé en ce que** l'entraînement mécanique de la machine tournante (R) est interrompu pendant une période déterminée (k, k') au voisinage de la fin de chaque phase (T0-T1,T1-T2).

4. Procédé selon l'une des revendications précédentes, **caractérisé en ce que** la vitesse de la machine tournante (R) est différente selon les phases.

5. Procédé selon l'une des revendications précédentes, **caractérisé en ce que** pendant une première partie (a) de la première phase (T0-T1), dudit gaz appauvri est simultanément introduit dans l'adsorbeur (A) par sa sortie (2).

6. Procédé selon l'une des revendications précédentes, **caractérisé en ce que**, pendant une première partie (d) de la deuxième phase (T1-T2), dudit gaz appauvri s'échappe simultanément de la sortie (2) de l'adsorbeur (A).

7. Procédé selon la revendication 5 et la revendication 6, mettant en oeuvre au moins deux modules (Mj), **caractérisé en ce que** les premières parties (a ;d) des première (T0-T1) et deuxième (T1-T2) phases ont la même durée.

8. Procédé selon l'une des revendications précédentes, mettant en oeuvre deux modules (Mj), **caractérisé en ce que**, pour chaque module (Mj), la première (T0-T1) et la deuxième (T1-T2) phases ont la même durée.

9. Procédé selon l'une des revendications 1 à 7, mettant en oeuvre trois modules, **caractérisé en ce que**, pour chaque module (Mj), la durée de la deuxième phase (T1-T2) est le double de celle de la première phase (T0-T1).

10. Procédé selon la revendication 9, **caractérisé en ce que** la machine tournante (R) est entraînée sensiblement à la même vitesse dans chacune des phases.

11. Procédé selon l'une des revendications 1 à 8, **caractérisé en ce que**, durant la première phase (T0-T1), la machine toumante (R) est entraînée à une vitesse inférieurs à sa vitesse de rotation durant la deuxième phase (T1-T2).

12. Procédé selon l'une des revendications précédentes, **caractérisé en ce que** le mélange à séparer est l'air.

13. Procédé selon la revendication 12, **caractérisé en ce que** le gaz appauvri est l'oxygène.

## Claims

1. Process employing a device for delivering a gas depleted in at least one of the constituents of a gas mixture by separating the gas mixture by VSA type adsorption, comprising at least one module (M) having an inlet for the gas mixture to be separated and an outlet for depleted gas that can be connected to a line (L) for using the depleted gas, the module comprising, in series between the inlet and the outlet, a reversible rotating machine (R) and an adsorber (A), according to a cycle comprising the following successive steps:
- putting the rotating machine into operation in a first direction during a first, pressurization and production phase (T₀-T₁) in order to supply the adsorber with the gas mixture up to a high cycle pressure (PM) above atmospheric pressure in order to deliver as output the depleted gas (L);
- stopping the operation of the rotating machine;
- putting the rotating machine into operation in the second direction for a second, depressurization and desorption phase (T₁-T₂) in order to depressurize the adsorber down to a low cycle pressure (Pm) not exceeding 0.6 × 10⁵ Pa; and
- stopping the operation of the rotating machine.

2. Process according to Claim 1, **characterized in that** the low pressure of the cycle is between 0.3 and 0.5 × 10⁵ Pa.

3. Process according to Claim 1 or 2, **characterized in that** the mechanical operation of the rotating machine (R) is stopped for a defined period (k, k') near the end of each phase (T₀-T₁, T₁-T₂).

4. Process according to one of the preceding claims, **characterized in that** the speed of the rotating machine (R) differs according to the phases.

5. Process according to one of the preceding claims, **characterized in that**, during a first part (a) of the first phase (T₀-T₁), the said depleted gas is simultaneously introduced into the adsorber (A) via its outlet (2).

6. Process according to one of the preceding claims, **characterized in that**, during a first part (d) of the second phase (T₁-T₂), the said depleted gas escapes simultaneously from the outlet (2) of the adsorber (A).

7. Process according to Claim 5 and Claim 6, employing at least two modules (Mⱼ), **characterized in that** the first parts (a;d) of the first (T₀-T₁) and the second (T₁-T₂) phases have the same duration.

8. Process according to one of the preceding claims, employing two modules (Mⱼ), **characterized in that**, for each module (Mⱼ), the first (T₀-T₁) and the second (T₁-T₂) phases have the same duration.

9. Process according to one of Claims 1 to 7, employing three modules, **characterized in that**, for each module (Mⱼ), the duration of the second phase (Tᵢ-T₂) is twice that of the first phase (T₀-T₁).

10. Process according to Claim 9, **characterized in that** the rotating machine (R) is operated at approximately the same speed in each of the phases.

11. Process according to one of Claims 1 to 8, **characterized in that**, during the first phase (T₀-T₁), the rotating machine (R) is operated at a speed below its rotational speed during the second phase (T₁-T₂).

12. Process according to one of the preceding claims, **characterized in that** the mixture to be separated is air.

13. Process according to Claim 12, **characterized in that** the depleted gas is oxygen.

## Patentansprüche

1. Verfahren zum Einsatz einer Vorrichtung für die Bereitstellung eines Spaltgases aus wenigstens einem der Bestandteile eines Gasgemisches mittels Trennung des Gasgemisches durch Adsorption nach dem VSA-Typ, umfassend wenigstens ein Modul (M) mit einem Eingang für das zu trennende Gasgemisch und einem Ausgang für das Spaltgas, der an eine Produktionsleitung (L) für Spaltgas angeschlossen werden kann, wobei das Modul in Serienschaltung zwischen dem Eingang und dem Ausgang eine reversible, rotierende Maschine (R) und einen Adsorber (A) umfasst, die einen Zyklus mit den folgenden nacheinander ablaufenden Phasen durchlaufen:
- Antrieb der rotierenden Maschine in einer ersten Richtung während einer ersten Phase der Druckbeaufschlagung und Produktion (T0 - T1), um den Adsorber mit dem Gasgemisch bis zu einem hohen Zyklusdruck (PM), der über dem atmosphärischen Druck liegt, zu versorgen und Spaltgas (L) am Ausgang bereitzustellen;
- Unterbrechung des Antriebs der rotierenden Maschine;
- Antrieb der rotierenden Maschine in der zweiten Richtung während einer zweiten Phase der Druckminderung und der Desorption (T1 - T2), um den Druck des Adsorbers bis zu einem niedrigen Zyklusdruck (Pm) abzubauen, der nicht höher als 0,6 x 10⁵ Pa ist; und
- Unterbrechung des Antriebs der rotierenden Maschine.

2. Verfahren nach Anspruch 1, **gekennzeichnet dadurch, dass** der niedrige Zyklusdruck zwischen 0,3 und 0,5 x 10⁵ Pa liegt.

3. Verfahren nach Anspruch 1 oder 2, **gekennzeichnet dadurch, dass** der mechanische Antrieb der rotierenden Maschine (R) während eines festgelegten Zeitraums (k, k') in der Nähe des Endes jeder Phase (T0 - T1, T1 - T2) unterbrochen wird.

4. Verfahren nach einem der vorherigen Ansprüche, **gekennzeichnet dadurch, dass** die Geschwindigkeit der rotierenden Maschine (R) je nach den Phasen unterschiedlich ist.

5. Verfahren nach einem der vorherigen Ansprüche, **gekennzeichnet dadurch, dass** während eines ersten Teils (a) der ersten Phase (T0 - T1) das Spaltgas gleichzeitig in den Adsorber (A) durch dessen Ausgang (2) eingeführt wird.

6. Verfahren nach einem der vorherigen Ansprüche, **gekennzeichnet dadurch, dass** während eines ersten Teils (d) der zweiten Phase (T1 - T2) das Spaltgas gleichzeitig aus dem Ausgang (2) des Adsorbers (A) entweicht.

7. Verfahren nach Anspruch 5 und Anspruch 6, wobei wenigstens zwei Module (Mj) eingesetzt werden, **gekennzeichnet dadurch, dass** jeweils der erste Teil (a; d) der ersten Phase (T0 - T1) und der zweiten Phase (T1 - T2) die gleiche Dauer haben.

8. Verfahren nach einem der vorherigen Ansprüche, wobei zwei Module (Mj) eingesetzt werden, **gekennzeichnet dadurch, dass** für jedes Modul (Mj) die erste Phase (T0 - T1) und die zweite Phase (T1 - T2) die gleiche Dauer haben.

9. Verfahren nach einem der Ansprüche 1 bis 7, bei dem drei Module eingesetzt werden, **gekennzeichnet dadurch, dass** für jedes Modul (Mj) die Dauer der zweiten Phase (T1 - T2) doppelt so lang ist wie diejenige der ersten Phase (T0 - T1).

10. Verfahren nach Anspruch 9, **gekennzeichnet dadurch, dass** die rotierende Maschine (R) im Wesentlichen mit der gleichen Geschwindigkeit in jeder der Phasen angetrieben wird.

11. Verfahren nach einem der Ansprüche 1 bis 8, **gekennzeichnet dadurch, dass** während der ersten Phase (T0 - T1) die rotierende Maschine (R) mit einer Geschwindigkeit angetrieben wird, die niedriger als ihre Rotationsgeschwindigkeit während der zweiten Phase (T1 - T2) ist.

12. Verfahren nach einem der vorherigen Ansprüche, **gekennzeichnet dadurch, dass** das zu trennende Gemisch Luft ist.

13. Verfahren nach Anspruch 12, **gekennzeichnet dadurch, dass** das Spaltgas Sauerstoff ist.
